# EUROPÄISCHE PATENTSCHRIFT

(11) **EP 1 533 104 B1**
(45) Veröffentlichungstag und Bekanntmachung des Hinweises auf die Patenterteilung: **27.04.2011**
(21) Anmeldenummer: 04105334.9
(22) Anmeldetag: 27.10.2004
(51) Int. Cl.: B29C 65/00, F04D 29/22, B29C 65/02, B29C 65/08, B29C 65/16, B29C 65/48, B29L 22/00, B29L 31/08

(54) **Verfahren zur Herstellung eines Laufrades für eine Kreiselpumpe**
Process for manufacturing a rotor for a centrifugal pump
Procédé de fabrication d'un rotor pour une pompe centrifuge

(30) Priorität: 21.11.2003 DE 10354749
(43) Veröffentlichungstag der Anmeldung: 25.05.2005
(73) Patentinhaber: Continental Automotive GmbH, 30165 Hannover (DE)
(72) Erfinder: Köppler, Peter, 61118 Bad Vilbel (DE)

(56) Entgegenhaltungen:
- DE-A1- 19 906 645
- DE-U1- 29 713 027
- JP-A- 1 160 634
- JP-A- 3 193 432
- JP-A- 5 045 310
- JP-A- 10 159 790
- JP-A- 56 064 198
- JP-A- 59 103 998
- JP-A- 61 046 493
- US-A- 5 538 395

## Beschreibung

Laufräder für Kreiselpumpen sind bekannt. In "Grundlagen für die Planung von Kreiselpumpenanlagen", Fritz Brüchler, Dennis Carter, Peter Fandrey, Jan Fischer, Ralf Mann, 7. überarbeitete und erweiterte Auflage 2000, S. 44, Sterling SIHI GmbH" wird auf verschiedene Laufradformen hingewiesen. So unterscheidet man beispielsweise Radialräder und Halbaxialräder. Häufig bestehen Laufräder für Kreiselpumpen aus einer hinteren Deckscheibe und einer vorderen Deckscheibe, zwischen denen Schaufeln für das zu fördernde Medium angeordnet sind. Für einige Einsatzzwecke bestehen solche Laufräder aus Kunststoff. Bei der Herstellung solcher Laufräder ist es allgemein wünschenswert, diese in einem einzigen Arbeitsschritt durch ein Spritzgießverfahren herzustellen, was bei konstruktiv aufwendigen Laufradformen jedoch nicht möglich ist, da nach der Herstellung eines solchen Laufrades ein Ausfahren der Spritzwerkzeuge technisch nicht erfolgen kann.

Aus der JP-A-59-103998 ist ein Laufrad für eine Kreiselpumpe bekannt, bei dem ein erstes Teil eine Deckscheibe mit Anschlussstück aufweist. An dieser Deckscheibe sind Schaufeln ausgebildet. Ein zweites Teil, das eine gegenüberliegende Deckscheibe darstellt, weist an seiner Innenseite Nuten auf. Die Schaufeln greifen teilweise in die Nuten ein.

Der Erfindung liegt die Aufgabe zugrunde, ein Verfahren zur Herstellung eines Laufrades für eine Kreiselpumpe zu schaffen, das auf relativ einfache Weise realisiert werden kann, wobei der Anteil an zusätzlichen Verbindungsmitteln möglichst gering sein soll.

Die der Erfindung zugrunde liegende Aufgabe wird durch ein Verfahren zur Herstellung eines Laufrades für eine Kreiselpumpe gelöst, bei dem ein erstes Teil, das aus der hinteren Deckscheibe mit Anschlussstück für den Antrieb besteht, an der, an ihrer dem Anschlussstück abgewandten Seite Schaufeln angeordnet sind, als Einzelteil aus Kunststoff in einem Spritzgießverfahren hergestellt wird und anschließend ein zweites Teil aus Kunststoff, das die vordere Deckscheibe darstellt und an ihrer Innenseite mit Nuten versehen ist, die komplementär zu den, der hinteren Deckscheibe abgewandten Kanten der Schaufeln ausgebildet sind, auf das erste Teil aufgesetzt wird, dadurch gekennzeichnet, daß jede der hinteren Deckscheibe abgewandte Kante der Schaufeln in eine komplementär ausgebildete Nut eingreift und dadurch eine Verbindung des ersten Teiles mit dem zweiten Teil erfolgt, und eine daraus resultierende teils reibschlüssige, teils formschlüssige Verbindung beider Teile erfolgt. Unter der Bezeichnung Laufrad sind radiale und halbaxiale Laufräder zu verstehen. Das Anschlussstück für den Antrieb kann beispielsweise in Form eines Rohrstutzens gefertigt sein. Als Kunststoffe eignen sich die im Spritzgießverfahren bearbeitbaren Kunststoffe, wobei sich die Auswahl nach dem Einsatzzweck des Laufrades der Kreiselpumpe richtet. Die vordere Deckscheibe ist in der Regel teilkreisförmig ausgebildet und verläuft infolge der Strömungstechnik bogenförmig oder konisch. Unter der komplementären Ausbildung der Nuten ist ein Nutenverlauf zu verstehen, der den, der hinteren Deckscheibe abgewandten Kanten der Schaufeln derart entspricht, so dass diese Kanten in die Nuten eingebracht werden können. Es hat sich in überraschender Weise gezeigt, dass sich nach dem Verfahren zur Herstellung eines Laufrades für eine Kreiselpumpe eine Verbindung des ersten Teiles mit dem zweiten Teil infolge des Eingreifens der der hinteren Deckscheibe abgewandten Kanten der Schaufeln in die Nuten des zweiten Teiles realisieren lässt, wobei für die meisten Einsatzzwecke des Laufrades auf zusätzliche Verbindungsmittel, wie beispielsweise Klebstoffe, gänzlich verzichtet werden kann. Beim Einführen der der hinteren Deckscheibe abgewandten Kanten der Schaufeln in die Nuten erfolgt in der Regel ein Verdrehen des ersten Teiles gegenüber dem zweiten Teil derart, so dass ein Eingreifen des ersten Teiles in das zweite Teil und eine daraus resultierende teils reibschlüssige, teils formschlüssige Verbindung beider Teile erfolgt. Eine optimale komplementäre Ausbildung der Nuten zu den Kanten der Schaufeln erfolgt dabei durch eine ingenieurmäßige Auslegung. Das Verfahren zur Herstellung eines Laufrades für eine Kreiselpumpe ist auf relativ einfache Weise zu realisieren und kostengünstig durchzuführen.

Eine bevorzugte Ausgestaltung der Erfindung besteht darin, dass die Verbindung anschließend durch Ultraschall- oder Laserschweißen verstärkt wird. Auf diese Weise lässt sich das Laufrad bei einer noch größeren Anzahl von Einsatzgebieten einsetzen.

Gemäß einer weiteren bevorzugten Ausgestaltung der Erfindung ist vorgesehen, dass die, der hinteren Deckscheibe abgewandten Kanten der Schaufeln oder die Nuten vor dem Aufsetzen des zweiten Teiles auf das erste Teil mit Klebstoff bestrichen werden. Dabei ist es möglich, entweder die Kanten der Schaufeln oder die Nuten oder sowohl die Kanten als auch die Nuten mit Klebstoff zu bestreichen. Dabei müssen die Nuten oder die Kanten nicht vollständig mit Klebstoff benetzt sein. Es reicht in der Regel aus, den Klebstoff ganz sparsam punktförmig aufzutragen. Auf diese Weise wird eine besonders feste Verbindung des ersten Teiles mit dem zweiten Teil erreicht, wobei gleichzeitig die Menge an zusätzlichem Verbindungsmittel in Form von Klebstoff minimiert wird und das Laufrad relativ vielen Einsatzzwecken zugänglich ist.

Die Erfindung wird nachfolgend anhand der Zeichnungen (Fig. 1 bis Fig. 5) näher und beispielhaft erläutert.
- Fig. 1: zeigt das Laufrad im Längsschnitt;
- Fig. 2: zeigt das erste Teil des Laufrades in dreidimensionaler Form;
- Fig. 3: zeigt die Unterseite des ersten Teiles des Laufrades mit Blick auf die Schaufeln in dreidimensionaler Form;
- Fig. 4: zeigt die Außenseite des zweiten Teiles des Laufrades in dreidimensionaler Form;
- Fig. 5: zeigt die Innenseite des zweiten Teiles des Laufrades in dreidimensionaler Form.

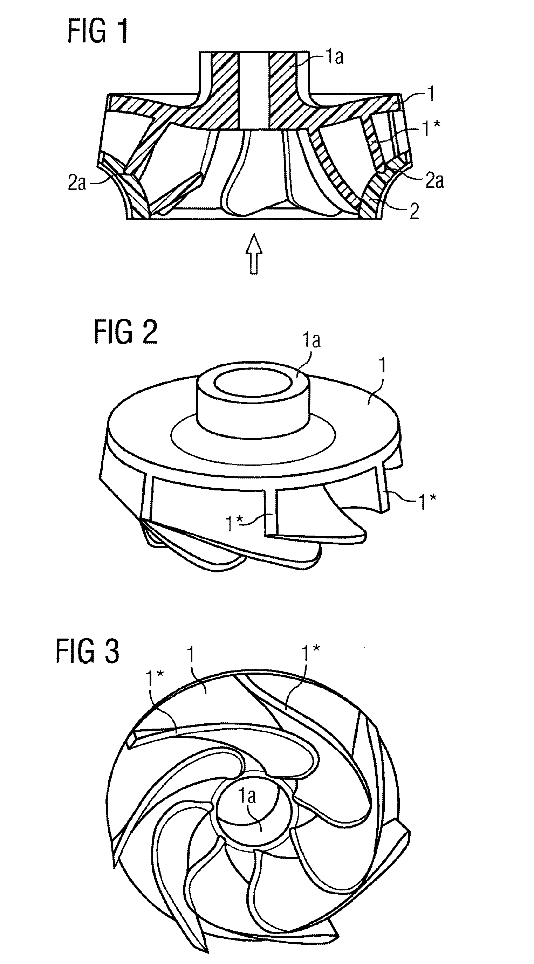

In Fig. 1 ist das Laufrad im Längsschnitt dargestellt. Das strömende Medium, bei dem es sich in der Regel um eine Flüssigkeit handelt, wird dem Laufrad dabei in Pfeilrichtung zugeführt. Das Laufrad weist ein erstes Teil auf, das aus der hinteren Deckscheibe 1 mit Anschlussstück 1a für den Antrieb (nicht dargestellt) besteht. An der hinteren Deckscheibe 1 sind an ihrer dem Anschlussstück 1a abgewandten Seite Schaufeln 1* angeordnet. Das erste Teil wird aus Kunststoff in einem Spritzgießverfahren hergestellt. Das Laufrad weist ferner ein zweites Teil aus Kunststoff auf, das die vordere Deckscheibe 2 darstellt und mit Nuten 2a versehen ist, die komplementär zu den der hinteren Deckscheibe 1 abgewandten Kanten der Schaufeln 1* ausgebildet sind. Bei dem Verfahren zur Herstellung des Laufrades wird das zweite Teil auf das erste Teil aufgesetzt, wobei jede der hinteren Deckscheibe 1 abgewandte Kante der Schaufeln 1* in eine komplementär ausgebildete Nut 2a eingreift und dadurch eine Verbindung des ersten Teiles mit dem zweiten Teil erfolgt.

In Fig. 2 ist das erste Teil des Laufrades dreidimensional dargestellt. Es stellt die hintere Deckscheibe 1 mit dem Anschlussstück 1a für den Antrieb (nicht dargestellt) dar, an der, an ihrer dem Anschlussstück 1a abgewandten Seite Schaufeln 1* angeordnet sind. Das erste Teil ist als Einzelteil aus Kunststoff in einem Spritzgießverfahren hergestellt worden.

In Fig. 3 ist das erste Teil des Laufrades dreidimensional mit Blick auf die Schaufeln 1* dargestellt. Das Anschlussstück 1a hat die Form eines Rohrstutzens, wobei diese Form für das Anschlussstück 1a jedoch nicht zwingend ist.

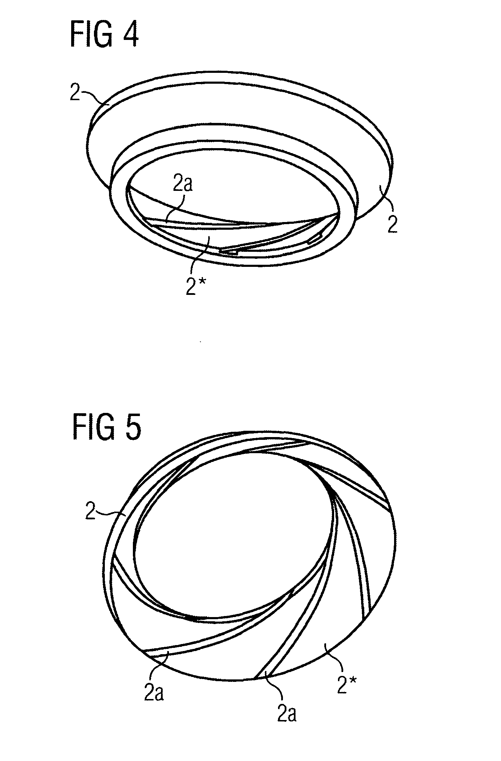

In Fig. 4 ist die Außenseite des zweiten Teiles des Laufrades dreidimensional dargestellt. Das zweite Teil stellt die vordere Deckscheibe 2 dar und ist teilkreisförmig, konisch verlaufend ausgebildet. An seiner Innenseite 2* ist das zweite Teil mit Nuten 2a versehen, die komplementär zu dem der hinteren Deckscheibe 1 abge wandten Kanten der Schaufeln (nicht dargestellt) ausgebildet sind.

In Fig. 5 ist die Innenseite 2* des zweiten Teiles des Laufrades dargestellt.

Eine Verbindung des ersten Teiles mit dem zweiten Teil kann in vorteilhafter Weise für viele Einsatzzwecke ohne die Anordnung von zusätzlichen Verbindungsmitteln erfolgen.

## Patentansprüche

1. Verfahren zur Herstellung eines Laufrades für eine Kreiselpumpe, bei dem ein erstes Teil, das aus der hinteren Deckscheibe (1) mit Anschlussstück (1a) für den Antrieb besteht, an der, an ihrer dem Anschlussstück (1a) abgewandten Seite Schaufeln (1*) angeordnet sind, als Einzelteil aus Kunststoff in einem Spritzgießverfahren hergestellt wird und anschließend ein zweites Teil aus Kunststoff, das die vordere Deckscheibe (2) darstellt und an seiner Innenseite (2*) mit Nuten (2a) versehen ist, die komplementär zu den, der hinteren Deckscheibe (1) abgewandten Kanten der Schaufeln (1*) ausgebildet sind, auf das erste Teil aufgesetzt wird, **dadurch gekennzeichnet, dass** jede der hinteren Deckscheibe (1) abgewandte Kante der Schaufeln (1*) in eine komplementär ausgebildete Nut (2a) eingreift, und dadurch eine Verbindung des ersten Teiles mit dem zweiten Teil erfolgt, und eine daraus resultierende teils reibschlüssige, teils formschlüssige Verbindung beider Teile erfolgt.

2. Verfahren nach Anspruch 1, bei dem die Verbindung anschließend durch Ultraschall- oder Laserschweißen verstärkt wird.

3. Verfahren nach Anspruch 1, bei dem die der hinteren Deckscheibe (1) abgewandten Kanten der Schaufeln (1*) oder die Nuten (2a) vor dem Aufsetzen des zweiten Teiles auf das erste Teil mit Klebstoff bestrichen werden.

## Claims

1. Method for producing a rotor for a centrifugal pump, in which a first part, which consists of the rear shroud (1) with connection piece (1a) for the drive, on which shroud, on its side facing away from the connection piece (1a), blades (1*) are arranged, is produced as an individual part from plastic in an injection-moulding method, and, subsequently, a second part made from plastic, which constitutes the front shroud (2) and is provided on its inside (2*) with grooves (2a) which are formed complementarily to those edges of the blades (1*) which face away from the rear shroud (1), is placed on the first part, **characterized in that** each edge of the blades (1*) which faces away from the rear shroud (1) engages into a complementarily formed groove (2a) and connection of the first part to the second part thereby takes place, and a resulting partly frictional and partly positive connection of both parts occurs.

2. Method according to Claim 1, in which the connection is subsequently reinforced by ultrasonic or laser welding.

3. Method according to Claim 1, in which those edges of the blades (1*) which face away from the rear shroud (1) or the grooves (2a) are coated with adhesive before the second part is placed on the first part.

## Revendications

1. Procédé de fabrication d'un rotor de pompe centrifuge, au cours duquel une première partie, qui se compose de la plaque arrière de couverture (1) avec pièce de raccordement (1a) pour l'entraînement, sur laquelle plaque de couverture des aubes (1*) sont montées sur le côté opposé à la pièce de raccordement (1a), est fabriquée en matière plastique en tant que pièce autonome par un procédé en moulage par injection et, ensuite, une deuxième partie en matière plastique, qui représente la plaque avant de couverture (2) et qui est dotée, sur sa face intérieure (2*), de rainures (2a), qui sont complémentaires des arêtes des aubes (1*) opposées à la plaque arrière de couverture (1), est enfichée sur la première partie, **caractérisé par le fait que** chaque arête des aubes (1*) opposée à la plaque arrière de couverture (1) s'insère dans une rainure (2a) complémentaire et que, de cette façon, il se forme une liaison entre la première partie et la deuxième partie et qu'il en résulte une liaison des deux parties, d'une part, par friction et, d'autre part, par embrayage.

2. Procédé selon la revendication 1, au cours duquel la liaison est ensuite renforcée par soudage à ultrasons ou soudage au laser.

3. Procédé selon la revendication 1, au cours duquel les arêtes des aubes (1*) opposées à la plaque arrière de couverture (1) ou les rainures (2a) sont enduites de colle avant d'enficher la deuxième partie sur la première partie.
